# FASCICULE DE BREVET EUROPEEN

(11) **EP 2 526 464 B1**
(45) Date de publication et mention de la délivrance du brevet: **20.08.2014**
(21) Numéro de dépôt: 11705918.8
(22) Date de dépôt: 21.01.2011
(51) Int. Cl.: G05D 11/13

(54) **PROCÉDÉ DE COMMANDE D'UN SYSTÈME DE DOSAGE ET DE MÉLANGE D'UN PRODUIT À PLUSIEURS COMPOSANTS, SYSTÈME DE DOSAGE ET DE MÉLANGE DUDIT PRODUIT, ET INSTALLATION DE PULVÉRISATION OU D'EXTRUSION COMPORTANT UN TEL SYSTÈME**
VERFAHREN ZUR STEUERUNG EINES SYSTEMS ZUR VERMESSUNG UND MISCHUNG EINES PRODUKTS MIT MEHREREN KOMPONENTEN, SYSTEM ZUR VERMESSUNG UND MISCHUNG SOLCHES PRODUKTS SOWIE SPRÜH- ODER EXTRUSIONSANLAGE MIT SOLCHEM SYSTEM
METHOD FOR CONTROLLING A SYSTEM FOR METERING AND MIXING A PRODUCT HAVING A PLURALITY OF COMPONENTS, METERING AND MIXING SYSTEM AND SPRAYING OR EXTRUSION FACILITY COMPRISING SAME

(30) Priorité: 22.01.2010 FR 1050427
(43) Date de publication de la demande: 28.11.2012
(73) Titulaire: EXEL INDUSTRIES, 51200 Epernay (FR)
(72) Inventeur: BALLU, Patrick, 51100 Reims (FR)
(74) Mandataire: Laget, Jean-Loup
(86) Numéro de dépôt international: PCT/FR2011/050117
(87) Numéro de publication internationale: WO 2011/089364

(56) Documents cités:
- EP-A1- 2 101 239
- WO-A1-03/045130
- US-A- 4 176 672
- US-A- 4 440 314

## Description

La présente invention concerne un procédé de commande d'un système de dosage et de mélange d'un produit composé d'un premier composant et d'un deuxième composant devant être mélangés dans un mélangeur à un rapport de dosage prédéterminé.

Par ailleurs, la présente invention concerne également un tel système de dosage et de mélange dans lequel le procédé de commande peut être mis en oeuvre, ainsi qu'un dispositif de pulvérisation ou d'extrusion comprenant un tel système de dosage et de mélange.

Le rôle de ce système est de délivrer un mélange d'au moins deux composants dans un rapport défini par un opérateur. Ce mélange est ensuite utilisé directement dans les applications, par exemple pour la pulvérisation d'une peinture à l'aide d'un dispositif de pulvérisation comprenant un pistolet qui est connecté à ce système de dosage et de mélange.

Le document US4176672 décrit encore un autre procédé de commande d'un système de dosage et de mélange d'un produit composé de deux composants ou plus. Seul le premier composant est associé à un dispositif de mesure de débit générant un signal électrique sous forme d'impulsions. La commande de la ou les autres pompes se fait à l'aide d'un moteur pas-à-pas respectif à partir des impulsions de ce dispositif afin d'effectuer un dosage avec le ratio demandé. Ce procédé est relativement compliqué à mettre en oeuvre et par conséquent onéreux.

Pour doser et mélanger un produit bi-composant, il est en outre connu d'utiliser un système comprenant une première pompe verticale alternative à double effet apte à alimenter le premier composant dans le mélangeur, et une deuxième pompe verticale alternative à double effet apte à alimenter le deuxième composant dans le mélangeur, en général de façon séquentielle par rapport à la première pompe. Le déplacement du piston de chaque pompe peut être inversé d'un sens d'expulsion du composant à un sens d'aspiration et d'expulsion du composant et vice versa. Le circuit de chaque pompe comprend, outre un clapet d'aspiration et un clapet de refoulement associés à la pompe, une vanne d'alimentation insérée entre le clapet de refoulement de chaque pompe et le mélangeur.

Un procédé de commande connu comprend les phases suivantes consistant à :
- ouvrir la vanne d'alimentation de la première pompe et effectuer une alimentation d'une dose prédéfinie dans le mélangeur en fonction dudit rapport de dosage prédéterminé;

- fermer la vanne d'alimentation de la première pompe ;
- ouvrir la vanne d'alimentation de la deuxième pompe et effectuer une alimentation d'une dose prédéfinie dans le mélangeur en fonction dudit rapport de dosage prédéterminé;
- fermer la vanne d'alimentation de la deuxième pompe de manière à terminer les phases d'un premier cycle d'alimentation ;
- déclencher l'inversion du piston de chaque pompe dans son sens de d'aspiration et d'expulsion lorsqu'il est nécessaire de remplir de nouveau cette pompe du composant correspondant ; et
- ouvrir de nouveau la vanne d'alimentation de la première pompe pour commencer le cycle suivant en répétant ces phases.

Dans ce système connu à alimentation séquentielle, l'inversion du déplacement du piston de la pompe du sens d'expulsion vers le sens d'aspiration et d'expulsion de la pompe et vice versa est déclenchée par une butée de fin de course du piston de la pompe.

Le brevet US6896152 décrit un autre système à alimentation séquentielle. Selon ce document, un dispositif pour distribuer un matériau à plusieurs composants sous pression en utilisant un pistolet de pulvérisation comporte deux capteurs de position dont chacun est associé à un ensemble dispositif d'entraînement / pompe respectif pour délivrer des incréments de résolution correspondant à un volume fixe alimenté par la pompe dans un mélangeur. Un contrôleur est relié aux capteurs de position pour déplacer alternativement un des ensembles dispositif d'entraînement/pompe d'un incrément. L'autre dispositif d'entraînement/pompe est ensuite déplacé d'un incrément pour régler le rapport de dosage prédéterminé.

L'inconvénient de ces systèmes connus est qu'ils ne permettent pas l'utilisation des pompes d'une façon optimale, en particulier parce que ce fonctionnement entraîne une interruption du débit lors d'une inversion de l'une des pompes avant de pouvoir continuer cette alimentation séquentielle.

La demanderesse a dans sa demande de brevet FR2928466 proposé une solution pour pallier les inconvénients des systèmes de dosage et de mélange connus. Selon cette demande de brevet, l'inversion de la première pompe est effectuée en même temps que la deuxième pompe effectue l'alimentation d'une dose de son composant, et inversement. Par conséquent, l'inversion de la première pompe a lieu en temps masqué.

Le document US4440314 décrit un procédé de commande d'un système de dosage et de mélange d'un produit composé d'au moins deux composants, destinés à être mélangés dans un mélangeur, à un rapport de dosage prédéterminé, le système comprenant une pompe alternative pour chacun des composants, l'alimentation du premier composant étant continue et l'alimentation du deuxième composant étant continue et proportionnelle à celle du premier composant pour respecter le rapport de dosage.

Le but de l'invention est de proposer, tout en gardant les avantages apportés par le FR2928466, un système de dosage et de mélange simplifié et moins onéreux dans la mesure où il comporte moins de pièces tout en permettant un mode de fonctionnement qui apporte une amélioration de l'homogénéité du mélange des composants du produit obtenu à la sortie du mélangeur.

Un premier objet de l'invention est un procédé de commande d'un système de dosage et de mélange d'un produit composé d'au moins deux composants, à savoir un premier composant et un deuxième composant destinés à être mélangés dans un mélangeur à un rapport de dosage prédéterminé, le système comprenant au moins deux pompes, à savoir une première pompe alternative apte à alimenter le premier composant dans le mélangeur, et une deuxième pompe alternative apte à alimenter le deuxième composant dans ledit mélangeur , le déplacement du piston de chaque pompe pouvant être inversé d'un sens d'aspiration et d'expulsion du composant correspondant à un sens d'expulsion du composant et inversement, le procédé comprenant les phases consistant à
- actionner la première pompe pour effectuer une alimentation du premier composant dans le mélangeur ;
- actionner la deuxième pompe pour effectuer une alimentation du deuxième composant dans le mélangeur en fonction dudit rapport de dosage prédéterminé;
- déterminer en continu le volume restant dans chaque pompe, et
- déclencher l'inversion du piston d'une pompe après avoir déterminé que le volume restant dans la pompe dans le sens actuel d'expulsion ou d'aspiration et d'expulsion est insuffisant pour assurer ledit rapport de dosage prédéterminé,
   et dans lequel
- l'alimentation du premier composant dans le mélangeur à partir de la première pompe est une alimentation en continu assurée pendant tout le fonctionnement du système de dosage et de mélange,
- l'alimentation du deuxième composant dans le mélangeur à partir de la deuxième pompe est une alimentation intermittente pour effectuer des cycles d'alimentation de doses du deuxième composant de manière à maintenir ledit rapport de dosage prédéterminé, et
- le deuxième composant est alimenté par la deuxième pompe avec une surpression par rapport à la pression à laquelle le premier composant est alimenté par la première pompe.

Selon d'autres caractéristiques du procédé selon l'invention :
- le débit du premier composant est constamment calculé afin de régler en continu lesdites doses du deuxième composant en fonction de la quantité du premier composant alimentée à chaque instant vers le mélangeur;
- le premier composant alimenté par la première pompe est empêché d'être refoulé en arrière lorsque la deuxième pompe alimente le deuxième composant;
- l'inversion des première et deuxième pompes est déclenchée quand le volume restant dans le sens actuel de refoulement du composant de la pompe correspondante est insuffisant pour assurer ledit rapport de dosage prédéterminé.
- le deuxième composant est alimenté sensiblement perpendiculairement dans le flux continu du premier composant de manière à faire pénétrer les doses du deuxième composant dans celui-ci;
- le premier composant est alimenté dans le mélangeur selon l'axe longitudinal de celui-ci, alors que le deuxième composant est alimenté dans le mélangeur sensiblement perpendiculairement à l'axe longitudinal de celui-ci.

Un deuxième objet de l'invention est un système de dosage et de mélange commandé pour la mise en oeuvre du procédé selon l'invention, le système comprenant une première pompe alternative apte à alimenter le premier composant dans ledit mélangeur, et une deuxième pompe alternative apte à alimenter le deuxième composant dans ledit mélangeur, le déplacement du piston de chaque pompe pouvant être inversé d'un sens d'aspiration et d'expulsion du volume de la pompe vers un sens d'expulsion du composant correspondant et inversement, un détecteur de déplacement étant associé à chaque pompe pour détecter en continu le déplacement du piston de la pompe, ce détecteur de déplacement étant relié à un contrôleur programmé pour déclencher l'inversion du piston d'une pompe après avoir déterminé que le volume restant dans la pompe dans le sens actuel d'expulsion ou d'aspiration et d'expulsion est insuffisant pour assurer le rapport de dosage prédéterminé, ledit contrôleur étant en outre programmé pour assurer une alimentation en continu du premier composant dans le mélangeur à partir de la première pompe pendant tout le fonctionnement du système de dosage et de mélange et pour assurer une alimentation intermittente du deuxième composant dans le mélangeur à partir de la deuxième pompe pour effectuer des cycles d'alimentation de doses du deuxième composant dans le mélangeur de manière à maintenir ledit rapport de dosage prédéterminé, caractérisé par le fait que la pression à laquelle la deuxième pompe alimente le deuxième composant est une surpression par rapport à la pression à laquelle le premier composant est alimenté par la première pompe.

Selon d'autres caractéristiques du système selon l'invention :
- un clapet anti-retour est associé à la première pompe afin d'empêcher le premier composant alimenté par celle-ci d'être refoulé en arrière lors de l'alimentation du deuxième composant par la deuxième pompe.

L'invention a également pour objet un dispositif de pulvérisation ou d'extrusion comportant le système de dosage et de mélange selon l'invention permettant la mise en oeuvre du procédé de commande selon l'invention.

D'autres caractéristiques et avantages de l'invention ressortiront de la description qui va suivre d'un mode de réalisation non limitatif de l'invention, en référence aux figures annexées dans lesquelles :

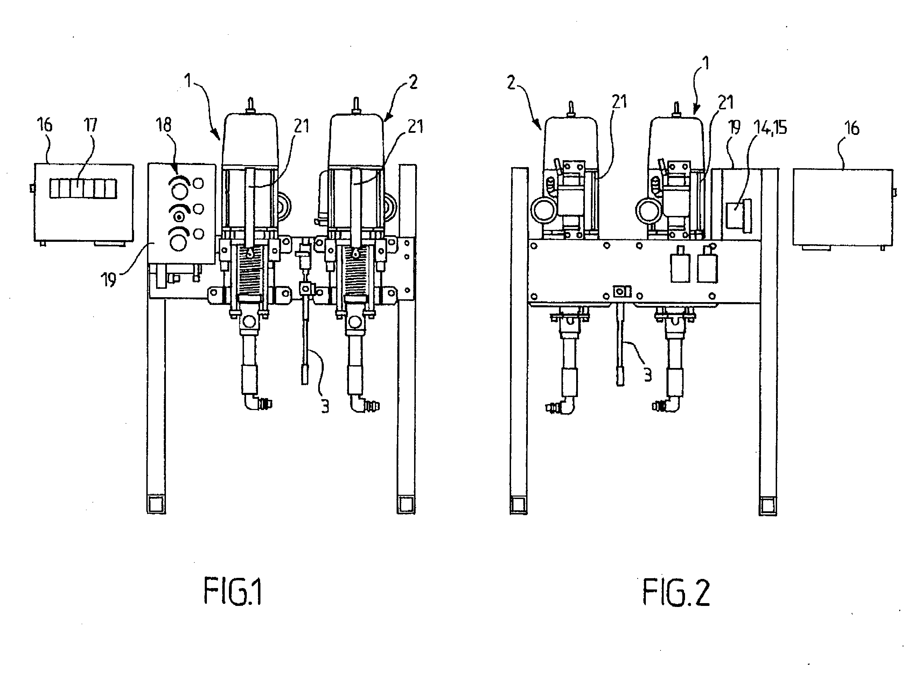

- la figure 1 est une vue de face d'un système de dosage et de mélange selon l'invention ;
- la figure 2 est une vue de derrière du système de dosage et de mélange de la figure 1 ;
- la figure 3 est une vue partielle à plus grande échelle du système de dosage et de mélange selon l'invention ;
- la figure 4 est une vue schématique illustrant le fonctionnement du système de dosage et de mélange selon l'invention.

Un mode de réalisation de l'invention sera maintenant décrit en référence aux figures dans lesquels les éléments identiques ou équivalents porteront les mêmes signes de référence.

Le système de dosage et de mélange illustré sur les figures est destiné au dosage et au mélange d'un produit tel qu'une peinture, à l'aide d'un dispositif de pulvérisation comprenant un pistolet de pulvérisation (non représenté). Cependant, le produit peut être un produit pâteux et le système de dosage et de mélange selon l'invention est également bien adapté pour être utilisé dans un dispositif d'extrusion.

Le produit est composé d'au moins deux composants dont un premier composant 4, et un deuxième composant 5. Le système comprend au moins deux pompes 1, 2 dont une première pompe alternative à double effet 1 contenant le premier composant, et une deuxième pompe alternative à double effet 2 contenant le deuxième composant. Dans l'exemple illustré, les pompes 1 et 2 sont des pompes pneumatiques.

Ces première et deuxième pompes sont aptes à alimenter leur composant respectif 4, 5 dans un mélangeur 3 à la sortie duquel le produit mélangé des deux composants 4, 5, ou plus, est distribué, par exemple par un pistolet de pulvérisation (non représenté) ou par un pistolet d'extrusion (non représenté).

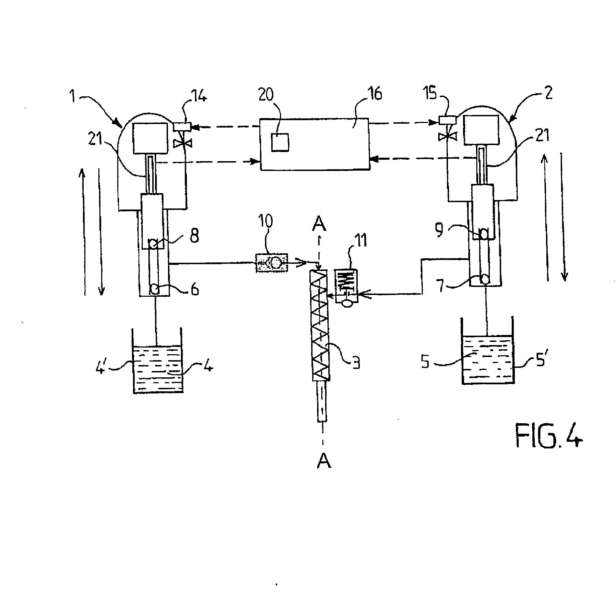

Chaque pompe 1, 2 est reliée à un réservoir de composant respectif 4', 5' (voir figure 4) par l'intermédiaire d'un clapet d'aspiration respectif 6, 7. Le piston (non représenté) de chaque pompe peut être déplacé dans un sens de remplissage en aspirant le composant (d'en bas vers le haut sur les figures) pour remplir le volume de la pompe lorsque le clapet d'aspiration correspondant 6, 7 est ouvert en mettant le volume de la pompe en communication avec le réservoir respectif 4', 5'. Pendant la phase d'aspiration, le piston de chaque pompe expulse du composant vers le mélangeur 3 par l'intermédiaire d'un clapet de refoulement respectif 8, 9.

Ensuite, le piston de la pompe peut être déplacé dans l'autre sens qui est un sens expulsion du composant vers le mélangeur 3 par l'intermédiaire d'un clapet de refoulement respectif 8, 9.

Le mouvement alternatif des pistons des pompes 1, 2 est indiqué par des flèches dans la figure 4.

La deuxième pompe 2 est reliée au mélangeur 3 par une vanne d'alimentation 11 qui peut être basculée entre une position entièrement fermée et une position entièrement ouverte pour une alimentation intermittente pour effectuer des cycles d'alimentation de doses du deuxième composant 5, alors que selon l'invention, la première pompe en est dépourvue pour l'obtention d'un flux continu du premier composant 4 alimenté sans interruption.

Egalement selon l'invention, la pression à laquelle la deuxième pompe 2 alimente le deuxième composant 5 est une surpression par rapport à la pression à laquelle le premier composant 4 est alimenté par la première pompe 1.

Encore selon l'invention, un clapet anti-retour 10 est associé à la première pompe 1 afin d'empêcher le premier composant 4 alimenté par celle-ci d'être refoulé en arrière lors de l'alimentation du deuxième composant 5 par la deuxième pompe 2.

Un autre avantage de cette invention est d'alimenter le deuxième composant 5 de manière intermittente sensiblement perpendiculairement directement dans le flux continu du premier composant 4 de manière à faire pénétrer les doses du deuxième composant 5 dans celui-ci. Cela peut être effectué à l'aide d'un simple raccord en T disposé en amont du mélangeur 3 ou bien directement dans celui-ci en y alimentant le premier composant 4 au moyen d'une aiguille selon l'axe longitudinal (A-A) du mélangeur, alors que le deuxième composant 5 est alimenté dans le mélangeur sensiblement perpendiculairement à l'axe longitudinal de celui-ci, comme cela est illustré à la figure 4.

On obtient ainsi un effet de pré-mélange, soit en amont du mélangeur 3, soit au début du mélangeur, ce qui améliore l'homogénéité du produit mélangé fourni à la sortie du mélangeur.

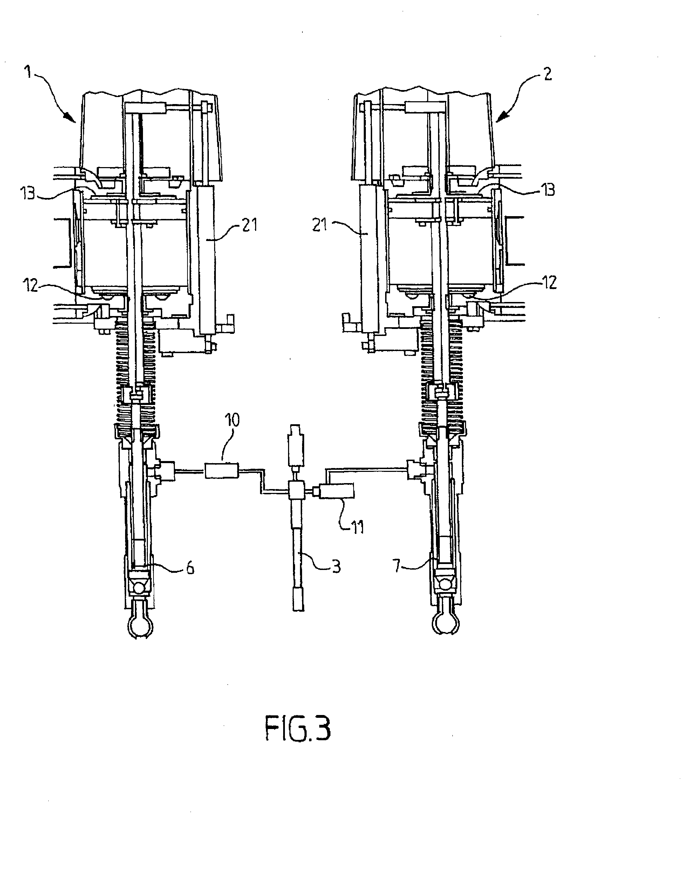

Chaque pompe est en outre de manière électronique ou mécanique pourvue d'un dispositif de sécurité sous forme d'une butée basse 12 et d'une butée haute 13 (voir figure 3) définissant les positions extrêmes du piston dans les deux sens.

Ces butées basse et haute 12, 13 sont définies par étalonnage, ce sont des butées électroniques de position lues par des capteurs.

L'inversion du piston de chaque pompe 1, 2 est déclenchée dans un sens ou dans l'autre par une électrovanne d'inversion respective 14, 15 (voir figure 4).

La vanne d'alimentation 11 et les électrovannes d'inversion 14, 15 sont toutes reliées à une boîte électronique de commande 16 qui commande l'ouverture et la fermeture de la vanne d'alimentation 11 et des électrovannes d'inversion 14, 15.

La boîte de commande 16 comporte un écran d'affichage 17 des valeurs entrées à l'aide d'un jeu de boutons (non représenté) de réglage et de marche/arrêt associé à la boîte de commande 16.

Avant de commencer l'utilisation du système, on effectue les réglages suivants à l'aide du panneau de réglage 19 :
- réglage de la pression en agissant sur deux régulateurs d'air 18, un pour chaque pompe ; cette pression doit être maintenue pendant tout le fonctionnement des pompes ;

Avant de commencer l'utilisation du système, on effectue les réglages suivants à l'aide du panneau de réglage 16 :
- réglage du rapport de dosage des premier et deuxième composants 4, 5 ;
- réglage de la dose individuelle devant être expulsée de la pompe 2 à chaque ouverture de la vanne d'alimentation 11.

A titre d'exemple, la pression peut être réglée dans une plage de 0,1 à 100 bars, le rapport de dosage dans une plage de 1/1 à 100/1, et la dose de chaque pompe dans une plage de 0,1 cc à 100 cc, le rapport de dosage étant automatiquement maintenu à la valeur précédemment fixée.

Par ailleurs, la précision du dosage est par exemple de l'ordre de +/- 1 %.

La boîte électronique 16 comporte un contrôleur 20 programmé pour déclencher l'inversion du piston d'une pompe (1, 2) après avoir déterminé que le volume restant dans la pompe (1, 2) dans le sens actuel d'expulsion ou d'aspiration et d'expulsion est insuffisant pour assurer le rapport de dosage prédéterminé.

Afin de déterminer à chaque instant le volume restant dans chaque pompe 1, 2, le contrôleur 20 est relié à un détecteur de déplacement 21 associé à chaque pompe pour détecter en continu le déplacement du piston de la pompe. Ainsi, le contrôleur est capable de calculer exactement le volume de composant expulsé en fonction du déplacement du piston de chaque pompe et par là aussi le volume restant du composant dans la pompe.

Le détecteur de déplacement 21 peut être un détecteur linéaire. -

Ainsi, le contrôleur reçoit un signal de sortie du détecteur 21 et calcule à chaque instant le volume restant dans la pompe 1, 2 pour déterminer si le volume restant est suffisant ou non pour assurer le rapport de dosage prédéterminé. Quand cela devient nécessaire, le contrôleur 20 déclenche l'inversion du piston de la pompe en commandant les électrovannes 14, 15, et cela avant d'atteindre la butée basse 12 ou haute 13.

L'inversion de la pompe 1 est ainsi effectuée pendant l'alimentation de l'autre composant de la pompe 2 de manière à éviter une chute de pression et de débit lors du fonctionnement du système. Par conséquent, l'inversion de la pompe 1 a lieu en temps masqué.

L'inversion de la pompe 2 est ainsi effectuée pendant que la vanne 11 est fermée et pendant l'alimentation de l'autre composant de la pompe 1 de manière à éviter une chute de pression et de débit lors du fonctionnement du système. Par conséquent, l'inversion de la pompe 2 a lieu en temps masqué.

Le détecteur 21 du piston de chaque pompe 1, 2 détecte le déplacement et son signal de sortie est alimenté vers le contrôleur 20 qui peut ainsi calculer exactement le volume restant à chaque instant dans chaque pompe immédiatement, d'une part pour déclencher l'inversion du piston de chaque pompe 1, 2 lorsque cela devient nécessaire, et d'autre part pour permettre au contrôleur 20 de calculer constamment le débit du premier composant 4 afin de régler en continu les doses du deuxième composant 5 alimentées à partir de la deuxième pompe 2 en fonction de la quantité du premier composant alimentée à chaque instant vers le mélangeur 3 et pour assurer l'alimentation intermittente nécessaire du deuxième composant 5 afin de maintenir le rapport de dosage prédéterminé.

Le procédé et le système sont particulièrement bien adaptés pour mélanger un premier composant constitué par une base avec un deuxième composant constitué par un catalyseur, mais aussi pour mélanger des produits pâteux.

## Revendications

1. Procédé de commande d'un système de dosage et de mélange d'un produit composé de deux composants, à savoir un premier composant (4) et un deuxième composant (5) destinés à être mélangés dans un mélangeur (3) à un rapport de dosage prédéterminé, le système comprenant deux pompes, à savoir une première pompe alternative à double effet (1) apte à alimenter le premier composant (4) dans le mélangeur (3), et une deuxième pompe alternative à double effet (2) apte à alimenter le deuxième composant (5) dans ledit mélangeur (3), le déplacement du piston de chaque pompe (1, 2) pouvant être inversé d'un sens d'aspiration et d'expulsion du composant correspondant (4, 5) à un sens d'expulsion du composant et inversement, le procédé comprenant les phases consistant à :
- actionner la première pompe (1) pour effectuer une alimentation du premier composant dans le mélangeur (3);
- actionner la deuxième pompe (2) pour effectuer une alimentation du deuxième composant dans le mélangeur (3) en fonction dudit rapport de dosage prédéterminé;
- déterminer en continu le volume restant dans chaque pompe (1, 2), et
- déclencher l'inversion du piston d'une pompe (1, 2) après avoir déterminé que le volume restant dans la pompe (1, 2) dans le sens actuel d'expulsion ou d'aspiration et d'expulsion est insuffisant pour assurer ledit rapport de dosage prédéterminé,
et dans lequel
- l'alimentation du premier composant (4) dans le mélangeur (3) à partir de la première pompe (1) est une alimentation en continu assurée pendant tout le fonctionnement du système de dosage et de mélange
- l'alimentation du deuxième composant (5) dans le mélangeur (3) à partir de la deuxième pompe (2) est une alimentation intermittente pour effectuer des cycles d'alimentation de doses du deuxième composant de manière à maintenir ledit rapport de dosage prédéterminé, et
- le deuxième composant (5) est alimenté par la deuxième pompe (2) avec une surpression par rapport à la pression à laquelle le premier composant est alimenté par la première pompe (1).

2. Procédé de commande selon la revendication 1, **caractérisé par le fait que** le débit du premier composant (4) est constamment calculé afin de régler en continu lesdites doses du deuxième composant (5) en fonction de la quantité du premier composant alimentée à chaque instant vers le mélangeur (3).

3. Procédé de commande selon la revendication 1 ou 2, **caractérisé par le fait que** le premier composant alimenté par la première pompe est empêché d'être refoulé en arrière lorsque la deuxième pompe (2) alimente le deuxième composant (5).

4. Procédé de commande selon l'une quelconque des revendications précédentes, **caractérisé par le fait que** l'inversion des première et deuxième pompes (1, 2) est déclenchée quand le volume restant dans le sens actuel de refoulement du composant (4, 5) de la pompe correspondante est insuffisant pour assurer ledit rapport de dosage prédéterminé.

5. Procédé de commande selon l'une quelconque des revendications précédentes, **caractérisé par le fait que** le deuxième composant (5) est alimenté sensiblement perpendiculairement dans le flux continu du premier composant (4) de manière à faire pénétrer les doses du deuxième composant dans celui-ci.

6. Procédé de commande selon :a revendication 5, **caractérisé par le fait que** le premier composant (4) est alimenté dans le mélangeur (3) selon l'axe longitudinal (A-A) de celui-ci, alors que le deuxième composant (5) est alimenté dans le mélangeur sensiblement perpendiculairement à l'axe longitudinal de celui-ci.

7. Système de dosage et de mélange commandé pour la mise en oeuvre du procédé selon l'une quelconque des revendications précédentes, le système comprenant une première pompe alternative à double effet (1) apte à alimenter le premier composant (4) dans ledit mélangeur (3), et une deuxième pompe alternative à double effet (2) apte à alimenter le deuxième composant (5) dans ledit mélangeur (3), le déplacement du piston de chaque pompe (1, 2) pouvant être inversé d'un sens d'aspiration et d'expulsion du volume de la pompe vers un sens d'expulsion du composant correspondant (4, 5) et inversement, un détecteur de déplacement (21) étant associé à chaque pompe (1, 2) pour détecter en continu le déplacement du piston de la pompe, ce détecteur de déplacement étant relié à un contrôleur (20) programmé pour déclencher l'inversion du piston d'une pompe (1, 2) après avoir déterminé que le volume restant dans la pompe (1, 2) dans le sens actuel d'expulsion ou d'aspiration et d'expulsion est insuffisant pour assurer le rapport de dosage prédéterminé, ledit contrôleur étant en outre programmé pour assurer une alimentation en continu du premier composant (4) dans le mélangeur (3) à partir de la première pompe (1) pendant tout le fonctionnement du système de dosage et de mélange et pour assurer une alimentation intermittente du deuxième composant (5) dans le mélangeur (3) à partir de la deuxième pompe (2) pour effectuer des cycles d'alimentation de doses du deuxième composant dans le mélangeur (3) de manière à maintenir ledit rapport de dosage prédéterminé, **caractérisé par le fait que** la pression à laquelle la deuxième pompe (2) alimente le deuxième composant est une surpression par rapport à la pression à laquelle le premier composant est alimenté par la première pompe (1).

8. Système de dosage et de mélange commandé selon la revendication 7, **caractérisé par le fait qu'**un clapet anti-retour est associé à la première pompe (1) afin d'empêcher le premier composant alimenté par celle-ci d'être refoulé en arrière lors de l'alimentation du deuxième composant par la deuxième pompe (2).

9. Dispositif de pulvérisation ou d'extrusion comportant le système de dosage et de mélange selon la revendication 7 ou 8 permettant la mise en oeuvre du procédé de commande selon l'une quelconque des revendications 1 à 6.

## Patentansprüche

1. Verfahren zur Steuerung eines Systems zum Dosieren und Mischen eines Produkts, das aus zwei Komponenten zusammengesetzt ist, nämlich einer ersten Komponente (4) und einer zweiten Komponente (5), die dazu bestimmt sind, in einem Mischer (3) in einem vorbestimmten Dosierungsverhältnis gemischt zu werden, wobei das System zwei Pumpen umfasst, nämlich eine erste alternative Pumpe mit Doppeleffekt (1), die imstande ist, die erste Komponente (4) in den Mischer (3) zu speisen, und eine zweite alternative Pumpe mit Doppeleffekt (2), die imstande ist, die zweite Komponente (5) in den Mischer (3) zu speisen, wobei die Verlagerung des Kolbens jeder Pumpe (1, 2) von einer Ansaug- und Auswurfrichtung der entsprechenden Komponente (4, 5) in eine Auswurfrichtung der Komponente umkehrbar ist und umgekehrt, wobei das Verfahren die Phasen umfasst, die darin bestehen:
- Betätigen der ersten Pumpe (1), um die erste Komponente in den Mischer (3) zu speisen,
- Betätigen der zweiten Pumpe (2), um in Abhängigkeit von dem vorbestimmten Dosierungsverhältnis die zweite Komponente in den Mischer (3) zu speisen,
- kontinuierliches Bestimmen des in jeder Pumpe (1, 2) verbliebenen Volumens und
- Auslösen der Umkehr des Kolbens einer Pumpe (1, 2), nachdem festgestellt wurde, dass das in der Pumpe (1, 2) in der aktuellen Ansaug- oder Auswurf- und Auswurfrichtung verbliebene Volumen unzureichend ist, um das vorbestimmte Dosierungsverhältnis sicherzustellen,
und wobei
- die Speisung der ersten Komponente (4) in den Mischer (3) mit der ersten Pumpe (1) eine kontinuierliche Speisung ist, die während des gesamten Betriebs des Dosierungs-und Mischsystems sichergestellt ist,
- die Speisung der zweiten Komponente (5) in den Mischer (3) mit der zweiten Pumpe (2) eine intermittierende Speisung ist, um Speisungszyklen von Dosen der zweiten Komponente derart durchzuführen, dass das vorbestimmte Dosierungsverhältnis aufrechterhalten wird, und
- die zweite Komponente (5) von der zweiten Pumpe (2) im Verhältnis zu dem Druck, mit dem die erste Komponente von der erste Pumpen (1) gespeist wird, mit einem Überdruck gespeist wird.

2. Verfahren zur Steuerung nach Anspruch 1, **dadurch gekennzeichnet, dass** der Durchsatz der ersten Komponente (4) ständig berechnet wird, um die Dosen der zweiten Komponente (5) in Abhängigkeit von der Menge der in jedem Augenblick in den Mischer (3) gespeisten ersten Komponente kontinuierlich zu regeln.

3. Verfahren zur Steuerung nach Anspruch 1 oder 2, **dadurch gekennzeichnet, dass** die erste von der ersten Pumpe gespeiste Komponente daran gehindert wird, zurückgefördert zu werden, wenn die zweite Pumpe (2) die zweite Komponente (5) speist.

4. Verfahren zur Steuerung nach einem der vorangehenden Ansprüche, **dadurch gekennzeichnet, dass** die Umkehr der ersten und zweite Pumpe (1, 2) ausgelöst wird, wenn das in der aktuellen Förderrichtung der Komponente (4, 5) verbliebene Volumen der entsprechenden Pumpe unzureichend ist, um das vorbestimmte Dosierungsverhältnis sicherzustellen.

5. Verfahren zur Steuerung nach einem der vorangehenden Ansprüche, **dadurch gekennzeichnet, dass** die zweite Komponente (5) etwa lotrecht in den kontinuierlichen Strom der ersten Komponente (4) gespeist wird, um die Dosen der zweite Komponente in diesen einzuführen.

6. Verfahren zur Steuerung nach Anspruch 5, **dadurch gekennzeichnet, dass** die erste Komponente (4) in den Mischer (3) gemäß der Längsachse (A-A) desselben gespeist wird, wogegen die zweite Komponente (5) in den Mischer etwa lotrecht zur Längsachse desselben gespeist wird.

7. Gesteuertes Dosierungs- und Mischsystem für die Umsetzung des Verfahrens nach einem der vorangehenden Ansprüche, wobei das System eine erste alternative Pumpe mit Doppeleffekt (1) umfasst, die imstande ist, die erste Komponente (4) in den Mischer (3) zu speisen, und eine zweite alternative Pumpe mit Doppeleffekt (2), die imstande ist, die zweite Komponente (5) in den Mischer (3) zu speisen, wobei die Verlagerung des Kolbens jeder Pumpe (1, 2) von einer Ansaug- und Auswurfrichtung des Volumens der Pumpe in eine Auswurfrichtung der entsprechenden Komponente (4, 5) umkehrbar ist und umgekehrt, wobei jeder Pumpe (1, 2) ein Verlagerungsdetektor (21) zugeordnet ist, um kontinuierlich die Verlagerung des Kolbens der Pumpe festzustellen, wobei dieser Verlagerungsdetektor mit einem Controller (20) verbunden ist, der programmiert ist, die Umkehr des Kolbens einer Pumpe (1, 2) auszulösen, nachdem festgestellt wurde, dass das in der Pumpe (1, 2) in der aktuellen Auswurf- oder Ansaug- und Auswurfrichtung verbliebene Volumen unzureichend ist, um das vorbestimmte Dosierungsverhältnis sicherzustellen, wobei der Controller ferner programmiert ist, um eine kontinuierliche Speisung der ersten Komponente (4) in den Mischer (3) mit der ersten Pumpe (1) während des gesamten Betriebs des Dosierungs- und Mischsystems sicherzustellen und um eine intermittierende Speisung der zweiten Komponente (5) in den Mischer (3) mit der zweiten Pumpe (2) sicherzustellen, um Speisungszyklen von Dosen der zweiten Komponente in den Mischer (3) derart durchzuführen, dass das vorbestimmte Dosierungsverhältnis aufrechterhalten wird, **dadurch gekennzeichnet, dass** der Druck, mit dem die zweite Pumpe (2) die zweite Komponente speist, im Verhältnis zu dem Druck, mit dem die erste Komponente von der ersten Pumpe (1) gespeist wird, ein Überdruck ist.

8. Gesteuertes Dosierungs- und Mischsystems nach Anspruch 7, **dadurch gekennzeichnet, dass** der ersten Pumpe (1) ein Rückschlagventil zugeordnet ist, um die erste Komponente, die von dieser gespeist wird, daran zu hindern, bei der Speisung der zweiten Komponente durch die zweite Pumpe (2) zurückgefördert zu werden.

9. Zerstäubungs- oder Extrusionsvorrichtung, die das Dosierungs- und Mischsystem nach Anspruch 7 oder 8 aufweist, das die Umsetzung des Verfahrens zur Steuerung nach einem der Ansprüche 1 bis 6 erlaubt.

## Claims

1. A method for controlling a system for metering and mixing a product made up of two components, namely a first component (4) and a second component (5) designed to be mixed in a mixer (3) at a predetermined metering ratio, the system comprising two pumps, namely a first dual-acting alternating pump (1) capable of supplying the first component (4) in the mixer (3), and a second dual-acting alternating pump (2) capable of supplying the second component (5) in said mixer (3), the movement of the piston of each pump (1, 2) being able to be reversed from a suction and expulsion direction of the corresponding component (4, 5) to an expulsion direction of the component and vice versa, the method comprising the following phases:
- actuating the first pump (1) to supply the first component in the mixer (3);
- actuating the second pump (2) to supply the second component in the mixer (3) based on said predetermined metering ratio;
- continuously determining the volume remaining in each pump (1, 2), and
- activating the reversal of the piston of a pump (1, 2) after having determined that the volume remaining in the pump (1, 2) in the current expulsion or suction and expulsion direction is insufficient to ensure said predetermined metering ratio,
and wherein
- the supply of the first component (4) in the mixer (3) from the first pump (1) is a continuous supply done throughout the entire operation of the metering and mixing system,
- the supply of the second component (5) in the mixer (3) from the second pump (2) is an intermittent supply to perform metered supply cycles of the second component so as to maintain said predetermined metering ratio, and
- the second component (5) is supplied by the second pump (2) with an overpressure relative to the pressure at which the first component is supplied by the first pump (1).

2. The control method according to claim 1, **characterized in that** the flow rate of the first component (4) is calculated constantly in order to continuously adjust the doses of the second component (5) based on the quantity of the first component supplied to the mixer (3) at each moment.

3. The control method according to claim 1 or 2, **characterized in that** the first component supplied by the first pump is prevented from being discharged backward when the second pump (2) supplies the second component (5).

4. The control method according to any one of the preceding claims, **characterized in that** the reversal of the first and second pumps (1, 2) is activated when the volume remaining in the current discharge direction of the component (4, 5) of the corresponding pump is insufficient to ensure said predetermined metering ratio.

5. The control method according to any one of the preceding claims, **characterized in that** the second component (5) is supplied substantially perpendicularly in the continuous stream of the first component (4) so as to cause the doses of the second component to penetrate therein.

6. The control method according to claim 5, **characterized in that** the first component (4) is supplied in the mixer (3) along the longitudinal axis (A-A) thereof, while the second component (5) is supplied in the mixer substantially perpendicular to the longitudinal axis thereof.

7. A metering and mixing system controlled to carry out the method according to any one of the preceding claims, the system comprising a first dual-acting alternating pump (1) capable of supplying the first component (4) in said mixer (3), and a second dual-acting alternating pump (2) capable of supplying the second component (5) in said mixer (3), the movement of the piston of each pump (1, 2) being able to be reversed from a suction and expulsion direction from the volume of the pump to an expulsion direction of the corresponding component (4, 5) and vice versa, a movement detector (21) being associated with each pump (1, 2) in order to continuously detect the movement of the piston of the pump, said movement detector being connected to a controller (20) programmed to activate the reversal of the piston of a pump (1, 2) after having determined that the volume remaining in the pump (1, 2) in the current expulsion or suction and expulsion direction is insufficient to ensure the predetermined metering ratio, said controller further being programmed to provide a continuous supply of the first component (4) in the mixer (3) from the first pump (1) throughout the entire operation of the metering and mixing system, and to ensure an intermittent supply of the second component (5) in the mixer (3) from the second pump (2) to perform a supply cycles of doses of the second component in the mixer (3) so as to maintain said predetermined metering ratio, **characterized in that** the pressure at which the second pump (2) supplies the second component is an overpressure relative to the pressure at which the first component is supplied by the first pump (1).

8. The controlled metering and mixing system according to claim 7, **characterized in that** a check valve is associated with the first pump (1) in order to prevent the first component supplied by the latter from being discharged backward during the supply of the second component by the second pump (2).

9. A spraying or extrusion device, including the metering and mixing system according to claim 7 or 8, allowing the implementation of the control method according to any one of claims 1 to 6.
